# EUROPÄISCHE PATENTANMELDUNG

(11) **EP 1 764 148 A1**
(43) Veröffentlichungstag der Anmeldung: **21.03.2007**
(21) Anmeldenummer: 05405541.3
(22) Anmeldetag: 14.09.2005
(51) Int. Cl.: B01F 3/04, B67D 1/00, B67D 1/12, A23L 2/54

(54) **Vorrichtung zum Herstellen von Mischgetränken und Druckbehälter dafür**

(71) Anmelder: Jäger, Urs, 5702 Niederlenz (CH)
(72) Erfinder: Jäger, Urs, 5702 Niederlenz (CH); Balkau, Werner, 8762 Schwändi b. Schwanden (CH)
(74) Vertreter: Frauenknecht, Alois J.

(57) **Zusammenfassung**

Die Vorrichtung umfasst einen Mischkörper (2) mit einem ersten Anschluss (3), an welchen ein Druckbehälter (4) mit einem unter Gasdruck stehenden Getränkekonzentrat (5) angeschlossen ist. Eine erste Leitung (15) führt vom ersten Anschluss (3) zu einer Mischzone (16). In der ersten Leitung (15) sind ein Druckreduzierventil (13), ein Dosierventil (14) und ein Rückschlagventil (12) eingebaut. Eine zweite Leitung (34) führt von einem zweiten Anschluss (24) zur Mischzone (16). Der zweite Anschluss (24) ist mit einer Wasserquelle (29) verbunden. Von der Mischzone (16) führt eine weitere Leitung zu einem dritten Anschluss (36) zur Abgabe des Mischgetränks über eine Abgabeleitung. Die Vorrichtung ist einfach aufgebaut und wegen der gedrungenen Bauweise leicht zu reinigen.

## Beschreibung

Verschiedene Vorrichtungen zum Herstellen von Mischgetränken sind bekannt. Beispielsweise bietet Soda Fresh™ (Handelsmarke der Firma Soda Fresh Schweiz AG, CH-5703 Seon) mehrere Modelle in verschiedenen Apparategrössen an. Dabei wird ein Getränkekonzentrat mittels einer externen Druckquelle (Pumpe oder Druckgasflasche) über ein Dosierventil einem Getränkebehälter zugeführt, gleichzeitig wird über eine andere Leitung Wasser zugegeben.

Der vorliegenden Erfindung liegt die Aufgabe zugrunde, die dazu bekannten Vorrichtungen zu vereinfachen und insbesondere deren Reinigung zu erleichtern. Diese Aufgabe wird durch die Merkmalskombination der Ansprüche 1 bis 10 gelöst.

Dadurch, dass der Konzentratbehälter unter Druck steht, kann er auf gleicher Höhe stehen wie der Empfangsbehälter (ein Trinkgefäss). Daher ist die Bauhöhe geringer und die Leitungen sind kurz und deshalb leicht zu reinigen. Wegen des Druckreduzierventils bleibt die Dosiermenge konstant auch bei abnehmendem Konzentrat-Vorrat. Das Rückschlagventil verhindert ein Auffüllen des Druckbehälters nach Entleeren von dessen Vorrat mit Wasser, was für den Verbraucher irritierend wäre.

Zweckmässig können mehrere Mischkörper zusammengeschlossen werden. Dies ermöglicht, die Vorrichtung preiswert an unterschiedliche Kundenwünsche anzupassen, also eine wählbare Anzahl von Getränkearten anzubieten.

Der Druck nach dem Reduzierventil sollte höher sein als der Wasserdruck, damit die Dosiermenge des Konzentrats unabhängig ist vom Wasserdruck.

Um kohlensäurehaltiges Soda zu zapfen, braucht es nach der Wasserquelle einen Karbonisator.

Einige Kunden möchten ihr Getränk jedoch lieber ohne Kohlensäure. Dazu ist es zweckmässig, vor dem Karbonisator noch eine weitere Leitung zu einem weiteren Anschluss des Mischkörpers abzuzweigen.

Die beiden Schaltventile zur Dosierung des Wassers (karbonisiert oder unkarbonisiert) sind zweckmässig auf dem Mischkörper montiert. Dies ergibt besonders kurze Leitungswege.

In der ersten Abgabeleitung ist vorzugsweise ein drittes Schaltventil angeordnet. Dies hat den Vorteil, dass der Abgang dieser Leitung nicht nachtropft. Dieses Ventil verhindert gleichzeitig das Eindringen von Luft in die Abgabeleitung und somit hygienische Probleme.

Vorzugsweise zweigt von der zweiten Leitung eine weitere Leitung ab, die über ein viertes Schaltventil mit einer zweiten Abgabeleitung verbunden ist. Die beiden Abgabeleitungen münden benachbart zueinander über dem Trinkglas. Dadurch kann der Kunde nebst einem von mehreren Soda-Mischgetränken auch karbonisiertes oder unkarbonisiertes gekühltes Wasser wählen.

Der erfindungsgemässe Druckbehälter unterscheidet sich von herkömmlichen Sprühdosen, wie sie u.a. für Farben und Insektizide verwendet werden, vor allem durch den Inhalt (Getränkekonzentrat) und den Austrittsdurchmesser des Austrittsventils. Bei Sprühdosen beträgt dieser unter 3 mm.

Nachfolgend wird ein Ausführungsbeispiel der Erfindung anhand der Zeichnung beschrieben. Darin zeigt:
- Fig. 1: einen Querschnitt durch die Vorrichtung, und
- Fig. 2: einen Querschnitt längs der Linie II-II in Fig. 1

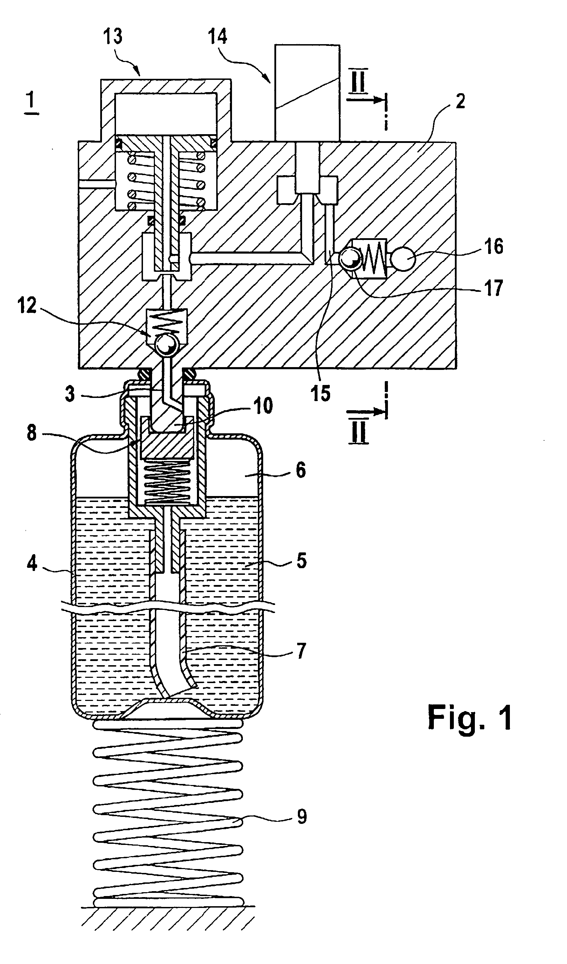

Die Vorrichtung 1, Fig. 1, zum Herstellen von Mischgetränken umfasst einen Mischkörper 2, im dargestellten Beispiel einen Quader aus Aluminium oder Kunststoff. Dieser hat einen ersten Anschluss 3, an welchen ein Druckbehälter 4 angeschlossen ist. Der Behälter 4 enthält ein Getränkekonzentrat 5, z.B. einen hochkonzentrierten Sirup oder Whisky (für Whisky-Soda) und steht unter dem Druck eines Gases 6, z.B. Stickstoff, von anfänglich etwa 9 bar. Der Behälter 4 hat ein Steigrohr 7, das zu einem Ausflussventil 8 führt. Dieses wird beim Aufstecken auf den Stutzen 10 des Anschlusses 3 geöffnet. Gegenüber herkömmlichen Sprühdosen hat das Ausflussventil 8 einen grösseren Innendurchmesser von über 4 mm, was kürzere Wartezeiten für den Kunden ergibt. Mittels einer Feder 9 wird der Behälter 4 von unten gegen den Anschluss 3 angepresst.

Vom Anschluss 3 gelangt das Konzentrat 5 über ein Rückschlagventil 12 zu einem Druckreduzierventil 13, das den Konzentrat-Druck auf z.B. 6 bar vermindert. Das Ventil 13 hat den Zweck, dass am nachgeschalteten Impuls-Magnetventil, welches das Dosierventil 14 bildet, stets der gleiche Druck ansteht, unabhängig vom Füllzustand des Behälters 4.

Das Rückschlagventil 12 bezweckt, dass bei leerem Behälter 4 kein Wasser in diesen fliessen kann.

Im Betrieb öffnet das Dosierventil 14 impulsweise jeweils für eine auf einer nicht dargestellten Tastatur wählbaren Anzahl Impulse entsprechend der gewünschten Konzentration des Mischgetränks. Die gewählte Konzentratmenge fliesst nun - unter Druck - über die Leitung 15 zur Mischzone 16.

Vor der Mischzone 16 ist in der Leitung 15 ein weiteres Rückschlagventil 17 eingebaut. Damit wird verhindert, dass Wasser über das Ventil 14 ins Konzentrat zurückfliessen kann.

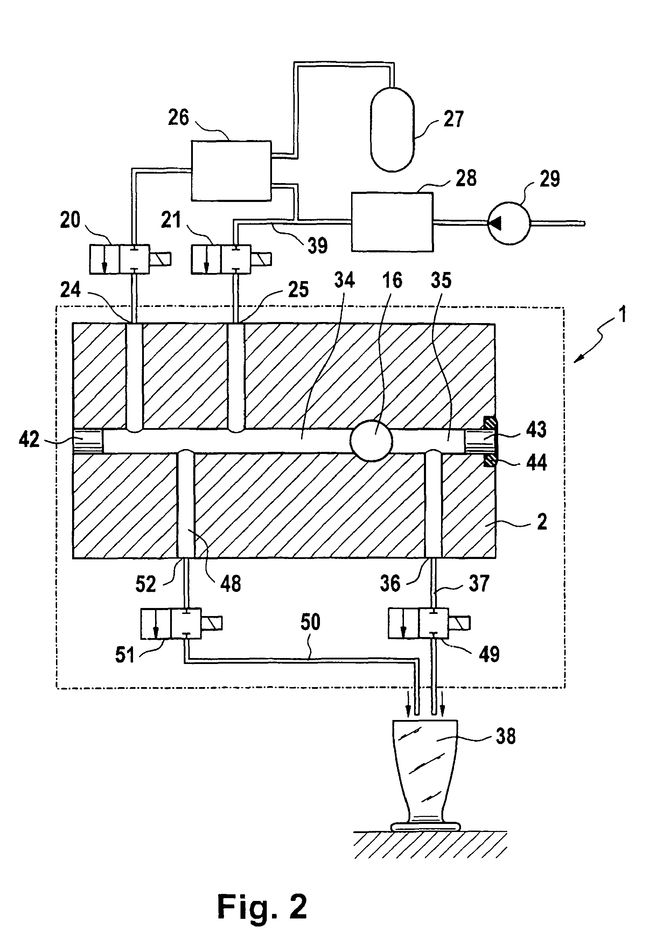

Siehe Fig. 2: Gleichzeitig oder nachher fliesst eine über die Ventile 20, 21 dosierte Menge Wasser entweder einem zweiten Anschluss 24 oder einem vierten Anschluss 25 des Mischkörpers 2 zu. Das Ventil 20 ist mit einem Karbonisator 26 verbunden, welcher das durchfliessende, gekühlte Wasser mit CO₂ aus einem Behälter 27 anreichert. Das Ventil 21 ist direkt mit dem Kühler 28 verbunden. Dieser wird von einer Wasserquelle 29 gespeist, hier dargestellt als Pumpe. Falls der Frischwasser-Leitungsdruck hoch genug ist, kann auf die Pumpe verzichtet oder an ihrer Stelle ein Druckreduzierventil eingesetzt werden. Der Druck nach der Quelle 29 ist vorzugsweise etwa 3 bar, also tiefer als der Druck nach dem Ventil 13.

Das zugeführte Wasser fliesst über eine zweite Leitung 34 ebenfalls zur Mischzone 16. Von dort fliesst das Gemisch über eine dritte Leitung 35 zu einem dritten Anschluss 36, an den eine Abgabeleitung 37 angeschlossen ist. Aus dieser fliesst das Mischgetränk in einen Behälter 38, z.B. ein Trinkglas.

Mehrere der Mischkörper 2 können zusammengeschlossen werden. Dazu ist ein Teil der Leitungen 34,35 als gemeinsame Durchgangsbohrung des Mischkörpers 2 ausgebildet, die im dargestellten Beispiel an beiden Enden durch Pfropfen 42,43 verstopft ist. Wird z.B. rechts vom dargestellten Mischkörper 2 ein zweiter identischer Mischkörper 2 angeschraubt, so wird beim ersten der Pfropfen 43 und beim zweiten der Pfropfen 42 weggelassen. Zusätzlich bleibt beim ersten Mischkörper 2 der Anschluss 36 verschlossen und beim zweiten Mischkörper 2 die Anschlüsse 24 und 25. Die an die beiden Mischkörper angeschlossenen Druckbehälter 4 enthalten dann Konzentrate 5 mit anderen Aromen, zwischen denen der Kunde wählen kann. Ein O-Ring 44 dichtet zwischen den beiden Mischkörpern 2 ab. Durch den modularen Aufbau wird die Herstellung unterschiedlicher Modelle mit einer unterschiedlichen Anzahl von Auswahlmöglichkeiten stark vereinfacht.

An die zweite Leitung 34 ist eine fünfte Leitung 48 angeschlossen, die über einen fünften Anschluss 52 und ein viertes Schaltventil 51 mit einer zweiten Abgabeleitung 50 verbunden ist. In der ersten Abgabeleitung 37 ist ein drittes Schaltventil 49 eingebaut. Dadurch erhält der Kunde die Möglichkeit, nicht nur zwischen mehreren von verschiedenen Mischgetränken, sondern zusätzlich zwischen gekühltem Wasser und karbonisiertem Wasser zu wählen. Die unmittelbar vor dem Ausfluss angeordneten Schaltventile 49,51 haben zudem den Vorteil, dass nichts nachtropfen und keine Luft in die Leitungen 50,37 eindringen kann, was hygienisch bedenklich wäre.

Wegen der kompakten Bauweise kann die Vorrichtung 1 leicht in einen Kühlschrank, z.B. in dessen Türe, eingebaut werden. Dann braucht es den Kühler 28 nicht, was erhebliche Kosten spart, denn der Kühler 28 ist die teuerste Komponente der beschriebenen Vorrichtung. Natürlich wird in diesem Fall die Vorrichtung nicht nur wesentlich kostengünstiger, sondern auch erheblich kleiner, denn handelsübliche Kühler 28 für diesen Zweck sind voluminös, obwohl sie weniger leistungsfähig sind als ein Kühlschrank-Kühler.

Als Druckbehälter haben sich vor allem solche von 0,5 l bis 1,0 l bewährt; sie sind leicht zu Tranportieren, Lagern und Handhaben.

Selbstverständlich ist das verwendete Druckgas nicht auf Stickstoff beschränkt. Kohlensäuregas oder Sauerstoff, aber auch Gasmischungen sind je nach Einsatzzweck der Vorrichtung ebenfalls geeignet. Die Konzentrate als solche sind in der Getränkeindustrie handelsüblich.

Bevorzugt wird für den Verfahrensablauf eine an sich übliche Mikroprozessorsteuerung verwendet, die so programmiert ist, dass nach dem Einfliessen des Konzentrats die Leitungen mit Wasser durchgespült werden. Ebenfalls lässt sich die Steuerung so gestalten, dass der Benutzer nach seinem Wunsch und Geschmack verschiedene Konzentrate auswählen und für das selbe Getränk, im richtigen Verhältnis, miteinander mischen kann. Werden Getränkekonzentrate in sehr hoher Konzentration (z.B. sirupartige "Colakonzentrate") verwendet, so kann eine zusätzliche Durchflussmessung und -Steuerung der Wasserzufuhr zweckmässig sein, um eine gleichbleibende Produktequalität der ausgegebenen Getränke zu gewährleisten.

Der Erfindungsgegenstand erlaubt mit geringem wirtschaftlichen Aufwand Getränke in nahezu beliebigen Geschmacksrichtungen bereitzustellen. Durch den Einsatz der kinderleicht austauschbarer Druckbehälter (Dosen) ist kein geschultes Personal zur Wartung der Vorrichtung erforderlich.

## Patentansprüche

1. Vorrichtung zum Herstellen von Mischgetränken, umfassend einen Mischkörper (2) mit einem ersten Anschluss (3), an welchen ein Druckbehälter (4) mit einem unter Gasdruck stehenden Getränkekonzentrat (5) anschliessbar ist, eine erste Leitung (15) zwischen dem ersten Anschluss (3) und einer Mischzone (16), ein Druckreduzierventil (13), ein Dosierventil (14) und ein erstes Rückschlagventil (12) in der ersten Leitung (15), eine zweite Leitung (34) zwischen einem zweiten Anschluss (24), an den eine Wasserquelle (29) anschliessbar ist und der Mischzone (16), und einen dritten Anschluss (36) zur Abgabe des Mischgetränks aus der Mischzone (16) über eine erste Abgabeleitung (37).

2. Vorrichtung nach Anspruch 1, wobei mehrere dieser Mischkörper (2) zusammengeschlossen sind und nur beim vordersten der zweite Anschluss (24) an die Wasserquelle (29) und nur beim hintersten der dritte Anschluss (36) an die Abgabeleitung (37) angeschlossen ist und die übrigen zweiten und dritten Anschlüsse verschlossen sind.

3. Vorrichtung nach Anspruch 1 oder 2, wobei der im Druckreduzierventil (13) eingestellte Druck höher ist als der Druck der Wasserquelle (29).

4. Vorrichtung nach einem der Ansprüche 1 bis 3, wobei zwischen der Wasserquelle (29) und dem zweiten Anschluss (24) ein Karbonisator (26) angeordnet ist.

5. Vorrichtung nach Anspruch 4, wobei zwischen der Wasserquelle (29) und dem Karbonisator (26) eine vierte Leitung (39) abzweigt, die mit einem vierten Anschluss (25) des Mischkörpers (2) verbunden ist, der mit der zweiten Leitung (34)verbunden ist.

6. Vorrichtung nach Anspruch 5, wobei dem zweiten Anschluss (24) ein erstes Schaltventil (20) und dem vierten Anschluss (25) ein zweites Schaltventil (21) zugeordnet ist.

7. Vorrichtung nach einem der Ansprüche 1 bis 6, wobei in der ersten Abgabeleitung (37) ein drittes Schaltventil (49) angeordnet ist.

8. Vorrichtung nach Anspruch 7, wobei von der zweiten Leitung (34) eine fünfte Leitung (48) abzweigt, die über ein viertes Schaltventil (51) mit einer zweiten Abgabeleitung (50) verbunden ist.

9. Vorrichtung nach einem der Ansprüche 1 bis 8, wobei in der ersten Leitung (15) unmittelbar vor der Mischzone (16) ein zweites Rückschlagventil (17) angeordnet ist.

10. Druckbehälter mit einem unter Gasdruck stehenden Getränkekonzentrat (5) für eine Vorrichtung nach einem der Ansprüche 1 bis 9, wobei er ein Steigrohr (7) für das Konzentrat (5) zu einem Austrittsventil (8) enthält, das beim Anschliessen an den ersten Anschluss (3) öffnet, wobei der Austrittsdurchmesser des Austrittsventils (8) zur Aufnahme eines Stutzens (10) des ersten Anschlusses (3) vorzugsweise mehr als 4 mm beträgt.
